**Europäisches Patentamt**

**European Patent Office**

**Office européen des brevets**

(19)

(11) Veröffentlichungsnummer: **0 028 215**
**B1**

(12) # EUROPÄISCHE PATENTSCHRIFT

(45) Veröffentlichungstag der Patentschrift:
**18.05.83**

(51) Int. Cl.³: **B 22 D 11/16**, G 05 B 5/00

(21) Anmeldenummer: **80890107.8**

(22) Anmeldetag: **24.09.80**

(54) **Einrichtung zum Messen des Abstandes zweier einander gegenüberliegender Rollenbahnen einer Stranggiessanlage.**

(30) Priorität: **22.10.79 AT 6872/79**

(43) Veröffentlichungstag der Anmeldung:
**06.05.81 Patentblatt 81/18**

(45) Bekanntmachung des Hinweises auf die Patenterteilung:
**18.05.83 Patentblatt 83/20**

(84) Benannte Vertragsstaaten:
**BE CH DE FR GB IT LI LU NL SE**

(56) Entgegenhaltungen:

**DE-A-2 749 539**
**DE-B-2 427 895**
**DE-B-2 450 405**
**DE-B-2 639 241**
**DE-B-2 645 022**
**FR-A-2 375 935**

(73) Patentinhaber: **VOEST-ALPINE Aktiengesellschaft,
Werksgelände, A-4010 Linz (AT)**

(72) Erfinder: **Scheurecker, Werner, Holzstrasse 58,
A-4020 Linz (AT)**
Erfinder: **Wirth, Josef, Wöberweg 6, A-4060 Leonding
(AT)**
Erfinder: **Scheinecker, Alois, Preglstrasse 53,
A-4020 Linz (AT)**

(74) Vertreter: **Wolfram, Gustav, Dipl.-Ing.,
Schwindgasse 7 P.O. Box 205, A-1041 Wien (AT)**

## Einrichtung zum Messen des Abstandes zweier einander gegenüberliegender Rollenbahnen einer Stranggiessanlage

Die Erfindung betrifft eine Einrichtung zum Messen des Abstandes zweier einander gegenüberliegender Rollenbahnen einer Stranggiessanlage, mit einem durch das Profil zwischen den Rollenbahnen durchzieh- bzw. schiebbaren Messkörper, der einander gegenüberliegende, die Mantelflächen der Rollen berührende Kontaktflächen aufweist, und mit einer innerhalb des Messkörpers befestigten Distanz-Messeinrichtung.

Eine Einrichtung dieser Art ist aus der AT-PS-326 853 bekannt. Der Messkörper dieser bekannten Einrichtung ist aus elastomerem Material, wie Gummi oder Kunststoff, hergestellt und die Distanz-Messeinrichtung ist innerhalb dieses Körpers eingebettet. Diese Einrichtung hat sich bei Stranggiessanlagen bewährt, jedoch ist es Voraussetzung zur Erzielung eines einwandfreien Messergebnisses, dass die Rollen der Rollenbahnen einander direkt gegenüberliegen. Sind die Rollen der Rollenbahnen zueinander versetzt angeordnet, d.h., dass nicht zu jeder Rolle der einen Rollenbahn eine Rolle der anderen Rollenbahn genau gegenüberliegt, sondern dass eine Rolle einer Rollenbahn — in Längsrichtung der Rollenbahnen gesehen — zwischen zwei Rollen der anderen Rollenbahn liegt, so kann die Distanz der Rollenbahnen mit der bekannten Einrichtung nicht mehr exakt vermessen werden. Der aus elastomerem Material hergestellte Körper weicht in einem solchen Fall der einen Rolle aus und wird zwischen die beiden Rollen der gegenüberliegenden Rollenbahn zu tief hineingedrückt.

Es ist weiters aus der DE-OS 2 538 141 bekannt, eine Einrichtung zum Messen der Rollendistanz mit einem Gehäuse auszustatten, von dessen Wand an einer Seite nachgiebig nach aussen gedrückte Gleitkufen abstehen, die mit zwei benachbarten Rollen einer Rollenbahn in Kontakt gelangen. Das Gehäuse selbst liegt mit an ihm an der gegenüberliegenden Seite starr montierten Gleitkufen auf zwei Rollen der gegenüberliegenden Rollenbahn auf. Neben den Kufen sind Distanz-Messeinrichtungen vorgesehen, die mittels Tastköpfen mit den Mantelflächen der Rollen einer Rollenbahn in Kontakt gelangen. Die in sich starr ausgebildeten Gleitkufen bilden bei jedem Messvorgang eine den Rollen, mit denen sie in Kontakt stehen, gemeinsame Tangente. Auch mit dieser Einrichtung ist kein einwandfreies Messergebnis bei nicht direkt einander gegenüberliegenden Rollen der beiden Rollenbahnen möglich, da diese Einrichtung nicht den Abstand zweier Rollen in radialer Richtung vom Krümmungsmittelpunkt der Biegelinie des Stranges aus gesehen, sondern den Normalabstand der Oberfläche einer Innenrolle an die gemeinsame Tangente zweier benachbarter Aussenrollen misst. Zu Schwierigkeiten den Rollenabstand zu bestimmen kommt es insbesondere im Bogenbereich einer Strangführung sowie in den ungleichmässige Krümmungsverhältnisse aufweisenden Rollenbahnbereichen, wie der Biege- bzw. Richtzone. Zusätzliche Schwierigkeiten treten dann auf, wenn die Rollen über die Gesamtlänge der gebogenen Rollenbahnen nicht gleichmässig verteilt sind. Dies ist bei modernen Schnellstranggiessanlagen stets der Fall, da zu Beginn der Rollenbahnen — unmittelbar unterhalb der Kokille — Rollen mit sehr kleinem Durchmesser eng aneinander benachbart angeordnet sind, wogegen zum Ende der Rollenbahnen hin der Rollendurchmesser — infolge Verfestigung des Stranges — grösser gewählt werden kann, wodurch sich eine grössere Rollenteilung ergibt und die Neigung der gemeinsamen Tangente sich fortlaufend ändert.

Die Erfindung bezweckt die Vermeidung dieser Nachteile und Schwierigkeiten und stellt sich die Aufgabe, eine Einrichtung der eingangs beschriebenen Art derart auszubilden, dass es möglich ist, die Distanz der Rollenbahnen auch bei einander nicht gegenüberliegend angeordneten Rollen mit grösstmöglicher Exaktheit zu bestimmen, wobei die Einrichtung auch bei über die Längserstreckung der Rollenbahnen unterschiedlichen Rollenteilungen und bei sich über die Länge der Rollenbahnen ändernden Krümmungsverhältnissen einwandfreie Messergebnisse liefern soll.

Diese Aufgabe wird erfindungsgemäss dadurch gelöst, dass die Kontaktflächen des Messkörpers aus elastisch verformbaren Federstahlbändern gebildet sind, deren Längserstreckung grösser ist als der Achsabstand dreier benachbarter Rollen einer der Rollenbahnen, wobei die Federstahlbänder durch zwischen ihnen angeordneten Druckeinheiten an die Mantelflächen der Rollen pressbar sind und die Distanz-Messeinrichtung an der Innenseite eines Federstahlbandes anliegt.

Vorteilhaft sind die Druckeinheiten verteilt über die Länge der Federstahlbänder angeordnet, wobei zweckmässig die Druckeinheiten etwa in einem dem Rollenabstand benachbarter Rollen entsprechenden Abstand ± 30% angeordnet sind.

Nach einer bevorzugten Ausführungsform ist eine der Druckeinheiten mit einem der Federstahlbänder fest verbunden und die anderen Druckeinheiten sind mit den Federstahlbändern gelenkig verbunden, wobei die mit dem Federstahlband fest verbundene Druckeinheit mittels sich schräg zur Längsrichtung der Einrichtung erstreckender Lenker mit diesem Federstahlband verbunden ist.

Zweckmässig ist jeder Lenker mit dem Federstahlband gelenkig und mit der Druckeinheit gelenkig und senkrecht zur Fläche der Federstahlbänder verschiebbar verbunden.

Um die Einrichtung für verschiedene Rollenbahn-Distanzen, die bei einer Stranggiessanlage für unterschiedliche Strangstärken anstellbar sind, verwenden zu können, sind die Druckeinheiten als Federtöpfe mit veränderbarer Höhe ausgebildet.

Zweckmässig liegen die Druckeinheiten mit konvexen Endflächen an den Federstahlbändern an und ragen mit aus den konvexen Endflächen vorstehenden Zapfen in Bohrungen der Federstahlbänder.

Eine bevorzugte Ausführungsform ist dadurch gekennzeichnet, dass die Distanz-Messeinrichtung mit einem Ende an einem der Federstahlbänder angelenkt ist und mit ihrem anderen, gegenüber dem angelenkten Ende beweglichen Ende, am gegenüberliegenden Federstahlband anliegt, wobei vorteilhaft die Distanz-Messeinrichtung zwischen zwei Druckeinheiten angeordnet ist.

Zweckmässig sind Mittel zur Befestigung der Einrichtung an einem Anfahrstrangkopf vorgesehen, wobei die Einrichtung entlang der Breite des Anfahrstrangkopfes verschiebbar und in unterschiedlichen Stellungen fixierbar ist. Dadurch ist es möglich, mit der Einrichtung auch mehrfach über ihre Länge geteilte Rollen durch mehrmaliges Durchziehen bzw. Durchschieben der Einrichtung zwischen den Rollenbahnen an verschiedenen Stellen ihrer Länge zu vermessen.

Um auch die Lage der Rollen exakt erfassen zu können, ist neben der Distanz-Messeinrichtung ein weiterer Messkörper angeordnet, der mit einem Ende an einem der Federstahlbänder gelenkig befestigt ist und dessen anderes, gegenüber dem gelenkig befestigten Ende bewegliches Ende durch eine Bohrung oder durch eine Ausnehmung des gegenüberliegenden Federstahlbandes ragt und gegen die Mantelflächen der Rollen pressbar ist.

Nach einer bevorzugten Ausführungsform für Brammenstranggiessanlagen beträgt die jeweils durch eine Druckeinheit auf die Federstahlbänder ausgeübte Spreizkraft zwischen 4 und 20 kN, vorzugsweise zwischen 8 und 16 kN, wobei das Verhältnis Querschnitt (in cm²) eines Federstahlbandes zur Spreizkraft (in kN) einer Druckeinheit im Bereich von 0,8 bis 5, vorzugsweise in einem Bereich zwischen 1 und 2,5 liegt, wobei vorteilhaft das Verhältnis des Querschnittes (in cm²) eines Federstahlbandes zum Rollenabstand (in cm) in einem Bereich zwischen 1 und 0,6 liegt.

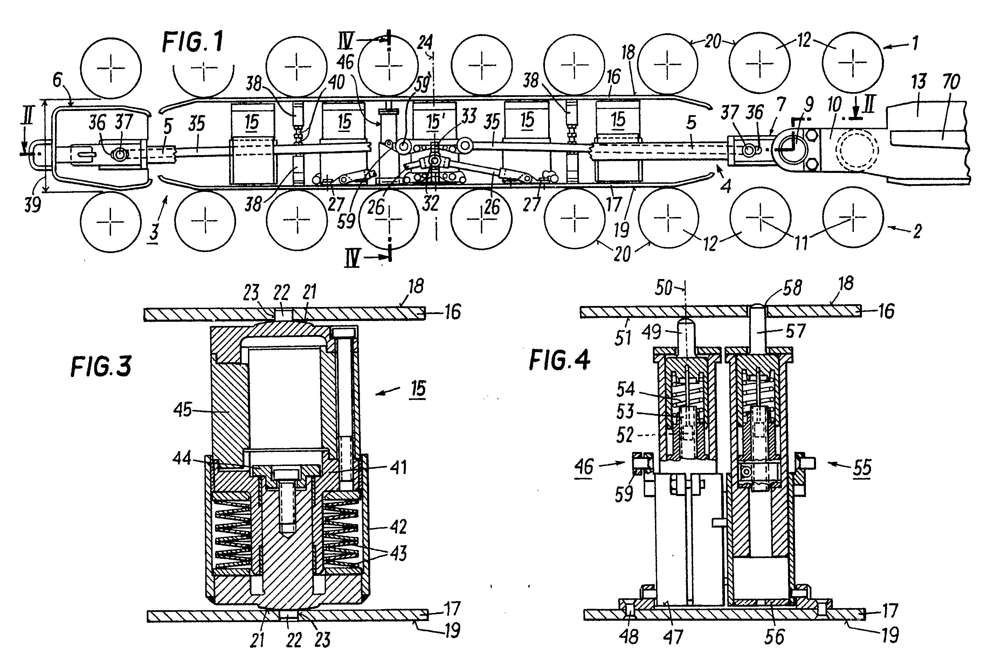

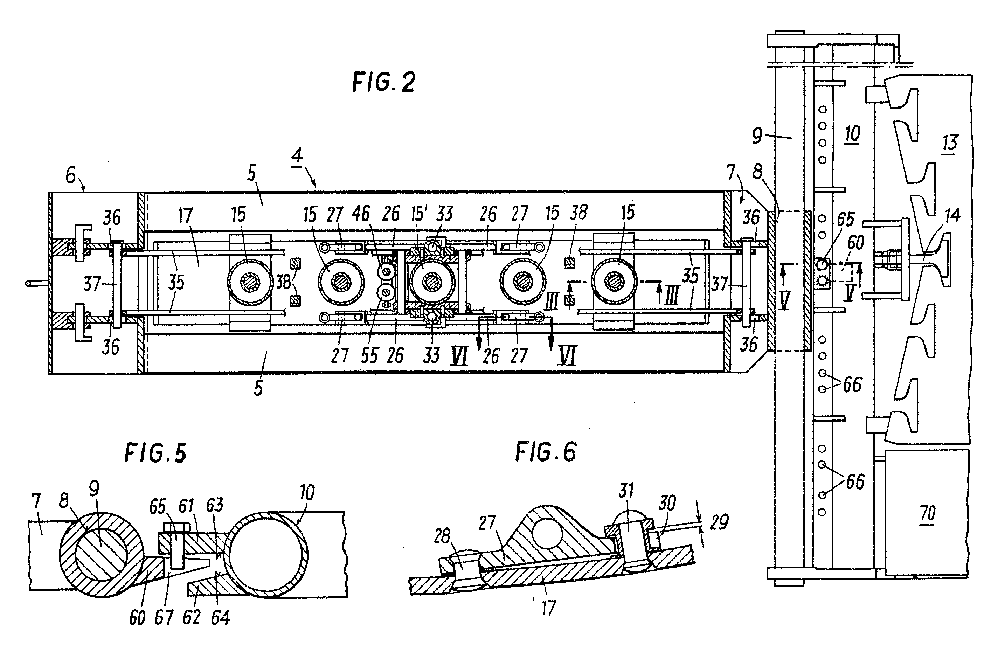

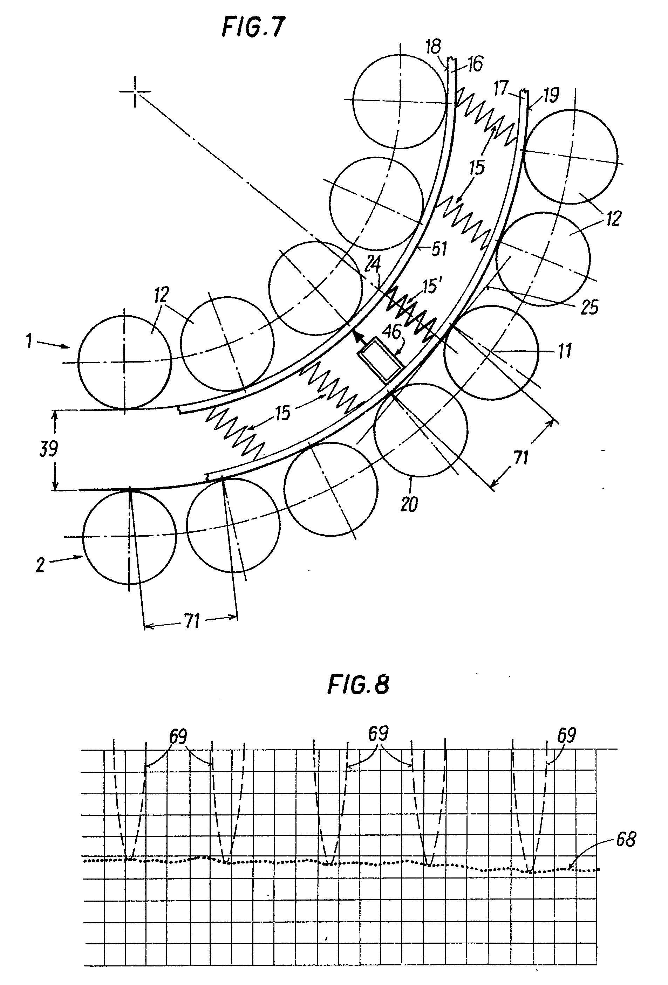

Die Erfindung ist nachfolgend anhand der Zeichnung an einem Ausführungsbeispiel näher erläutert, wobei Fig. 1 eine Seitenansicht einer erfindungsgemässen Einrichtung teilweise im Schnitt und Fig. 2 einen Schnitt gemäss der Linie II-II der Fig. 1 zeigen. Die Fig. 3 und 4 zeigen Schnitte gemäss den Linien III-III bzw. IV-IV der Fig. 1, 2 in vergrösserter Darstellung; die Fig. 5 und 6 stellen Details ebenfalls in Schnittdarstellung dar, wobei die Schnitte gemäss den Linien V-V bzw. VI-VI der Fig. 2 geführt sind. Fig. 7 zeigt den Einsatz der erfindungsgemässen Einrichtung in dem Bogenteil einer Stranggiessanlage in schematischer Darstellung. Fig. 8 gibt eine Messwert-Auswertung wieder.

Zwischen den Rollenbahnen 1 und 2 einer Strangführung einer Stranggiessanlage ist die Einrichtung 3 zum Messen des Abstandes der Rollenbahnen eingeschoben. Die Einrichtung 3 weist einen Rahmen 4 auf, der von zwei schmalen Längsholmen 5, einem austauschbaren Kopfteil 6 sowie einem Fussteil 7 gebildet ist. Der Fussteil weist eine Bohrung 8 auf, mit der er entlang eines Bolzen 9, der in einem Kupplungsstück 10 parallel zu den Achsen 11 der Rollen 12 der Rollenbahnen 1, 2 befestigt ist, verschiebbar ist. Das Kupplungsstück 10 ist an einem Anfahrstrangkopf 13 mittels einer Kupplung 14 befestigt.

Innerhalb des Rahmens 4 sind zwei durch fünf als Federtöpfe 15, 15' ausgebildete Druckeinheiten auf Distanz gehaltene und auseinander gepresste Federstahlbänder 16, 17 angeordnet, welche Federstahlbänder sich etwa über sechs Strangführungsrollen 12 erstrecken. Die aussenseitigen Flächen 18, 19 der Federstahlbänder 16, 17 gelangen mit den Mantelflächen 20 der Rollen 12 der Rollenbahnen 1, 2 in Kontakt. Anstelle der Federtöpfe könnten auch hydraulisch oder pneumatisch beaufschlagte, die Federstahlbänder 16, 17 auseinanderpressende Druckmittelzylinder usw. vorgesehen sein. Jeder Federtopf liegt mit konvexen Endflächen 21 an den Federstahlbändern 16, 17 an, wobei aus den konvexen Endflächen 21 vorstehende Zapfen 22 jeweils in eine Bohrung 23 der Federstahlbänder 16, 17 mit geringem Spiel ragen, um ein Gleiten der konvexen Endflächen 21 an den Federstahlbändern 16, 17 auszuschalten. Der mittlere Federtopf 15' ist mit einem der Federstahlbänder 17 so verbunden, dass er mit seiner Achse 24 gegenüber diesem Federstahlband 17, bzw. gegenüber der an das Federstahlband gelegten Tangentialfläche 25 bei gekrümmtem Federstahlband 17 rechtwinkelig ausgerichtet ist. Zu diesem Zweck sind an dem Federstahlband 17 Lenker 26 angelenkt, wobei die Anlenkung mittels einer Zwischenplatte 27 erfolgt, die, wie aus Fig. 6 ersichtlich, einerseits mit einer Niete 28 an dem Federstahlband befestigt ist und anderseits mit dem Federstahlband 17 mit einer mit Spiel 29 durch einen Schlitz 30 der Zwischenplatte 27 ragenden Niete 31 verbunden ist. Die beiden Lenker 26 (an jeweils einer Seite der Einrichtung 3) sind miteinander ebenfalls gelenkig verbunden, wobei an diesem Gelenk 32 ein Bolzen 33 gelagert ist, der senkrecht zu den Federstahlbändern 16, 17 gerichtet ist und der innerhalb von Ausnehmungen, die am mittleren Federtopf 15' vorgesehen sind, verschiebbar geführt ist.

Der mittlere Federtopf 15' ist weiters mit Laschen versehen, an denen vier Längslenker 35 angreifen (zwei an jeder Seite der Einrichtung), die etwa parallel zu den Längsholmen 5 des Rahmens 4 gerichtet sind und die mit ihren äusseren Enden am Kopfteil 6 und am Fussteil 7 des Rahmens 4 angelenkt sind. Sowohl der Kopf- als auch der Fussteil weisen in Richtung der Längsachse der Einrichtung 3 gerichtete Langlöcher 36 auf, durch die die Längslenker 35 haltenden Bolzen 37 ragen, so dass eine gewisse Beweglichkeit des mittleren Federtopfes 15' und damit der Federstahlbänder 16, 17 in Längsrichtung der Einrichtung 3 gegenüber dem Rahmen 4 gewährleistet ist.

Spannschlösser 38 bewirken den Zusammenhalt der beiden Federstahlbänder, so dass die Federtöpfe 15, 15' mit ihren Zapfen 22 nicht aus den Bohrungen 23 der Federstahlbänder 16, 17 rutschen können. Die Spannschlösser 38 lassen jedoch eine Verkleinerung des Abstandes der Federstahlbänder zu. Um die Einrichtung 3 für unterschiedliche Rollenbahndistanzen 39 verwenden zu können, ist die von den Spannschlössern 38 maximal begrenzte Entfernung der beiden Federstahlbänder mittels der Spannschlösser 38 verstellbar. Zu diesem Zweck werden entweder die Spannschrauben 40 der Spannschlösser verdreht oder es werden die Spannschrauben 40 gegen kürzere oder längere ausgetauscht.

Wie aus Fig. 3 ersichtlich, besteht jeder Federtopf 15, 15' aus einem Kolben 41 und einem Zylinder 42, wobei der Kolben 41 mittels im Inneren des Zylinders angeordneter Tellerfedern 43 nach aussen gedrückt wird. Ein am Zylinder 42 vorgesehener Anschlag 44 begrenzt die Bewegung des Kolbens 41 nach aussen. Die Länge des Kolbens ist mittels austauschbarer Distanzstücke 45 veränderbar, so dass die Höhe des Federtopfes und damit die Distanz der Federstahlbänder zum Zweck des Anpassens der Einrichtung an verschiedene Strangquerschnittsformate (und damit an unterschiedliche Rollenbahndistanzen 39) veränderbar ist.

Zwischen zwei mittleren Federtöpfen 15, 15' ist eine Distanz-Messeinrichtung 46 angeordnet, u. zw. ist sie (Fig. 4) mit einem Ende 47 an dem Federstahlband 17 mittels Bolzen 48 angelenkt und liegt mit ihrem anderen, als Taststift 49 ausgebildeten Ende, welches gegenüber dem anderen Ende 47 in Achsrichtung 50 der Distanz-Messeinrichtung 46 beweglich ist, an der Innenseite 51 des gegenüberliegenden Federstahlbandes 16 an. Im Inneren der Distanz-Messeinrichtung ist ein Eisenkern 52 innerhalb einer Magnetspule 53 verschiebbar, wobei der Eisenkern 52 mit dem beweglichen Ende, dem Taststift 49, verbunden ist. Mit dem Taststift 49 wird somit der Eisenkern 52 bewegt, wobei je nach Verschiebung des Eisenkernes 52 das Magnetfeld der Magnetspule 53 verändert und in ein elektrisches Ausgangssignal umgewandelt wird. Dieses Signal zeigt — nach einer erstmalig erfolgten Eichung — direkt die mechanische Verschiebung des Taststiftes 49 an. Das elektrische Ausgangssignal kann z.B. dazu verwendet werden, auf einem mit Batterie betriebenen Schreibgerät einen Messschrieb aufzuzeichnen. Eine Druckfeder 54 im Inneren der Distanz-Messeinrichtung sorgt dafür, dass der Taststift 49 stets an der Innenseite 51 des Federstahlbandes 16 anliegt.

Neben der Distanz-Messeinrichtung 46, d.h. in gleicher Entfernung vom Kopfteil 6, ist ein weiterer Messkörper 55 angeordnet, der ebenfalls mit einem Ende 56 am Federstahlband 17 angelenkt ist und dessen anderes, gegenüber dem ersten Ende bewegliches ebenfalls als Taststift 57 ausgebildetes Ende durch eine Bohrung 58 oder sonstige Ausnehmung des gegenüberliegenden Federstahlbandes 16 ragt. Der Taststift 57 steht ein Stück über die mit den Rollenmanteln in Kontakt kommende Fläche des Federstahlbandes hinaus. Bei Vorbeibewegen der Einrichtung 3 an den Rollen 12 wird dieses nach aussen ragende Ende gegen die Mantelflächen 20 der Rollen gepresst, wobei in analoger Weise wie bei der Distanz-Messeinrichtung 46 ein der Verschiebung des Taststiftes 57 proportionales Ausgangssignal erzeugt wird. Die Achsrichtung der Distanz-Messeinrichtung 46 ist rechtwinkelig zu den Federstahlbandebenen bzw. bei Durchbiegen der Federstahlbänder rechtwinkelig zu den an die Federstahlbänder bei der Distanz-Messeinrichtung gelegten Tangentialflächen gerichtet. Die miteinander verbundenen Messkörper 46 bzw. 55 können nicht kippen, da sie über einen Lenker 59 an einem seitlich am mittleren Federtopf 15' befindlichen Bolzen 59' angelenkt sind.

Der Fussteil weist eine zwischen Gegenleisten 61, 62 des Kupplungsstückes 10 ragende Anschlagleiste 60 auf, mit der er an Gegenflächen 63, 64 der Gegenleisten 61, 62 des Kupplungsstückes 10 anliegt, wenn sich die Einrichtung 3 ausserhalb der Rollenbahnen 1, 2 befindet. Damit wird erreicht, dass die Einrichtung 3 in nahezu waagrechter Lage mit dem Anfahrstrang gehoben werden kann, ohne nach unten wegzukippen. Sie kann auch nicht in die andere Richtung kippen, wenn sich die Einrichtung 3 z.B. in senkrechter Lage oberhalb der Biegezone der Rollenbahnen befindet. Die Anschlagleiste 60 ist so bemessen, dass die Einrichtung 3 innerhalb der Rollenbahnen 1, 2 ungehindert diesen folgen kann. Ein Arretierbolzen 65 stellt die Lage des Fussteiles 7 entlang des Bolzens 9 sicher. Der Kupplungsteil 10 weist mehrere entlang des Bolzens 9 angeordnete Bohrungen 66 in der Gegenleiste 61 für den Arretierbolzen auf, so dass die Einrichtung 3 entlang des Bolzens 9 in verschiedenen Lagen fixiert werden kann. Der Arretierbolzen 65 ragt in einen Schlitz 67 der Anschlagleiste 60. Dadurch ist es möglich, bei Brammenstranggiessanlagen sowohl an den Rollenenden als auch mehreren Lagen zwischen den Rollenenden die Rollenbahnen zu vermessen.

Die Funktion der Einrichtung ist folgende:

Die durch die Federtöpfe 15, 15' gespreizten Federstahlbänder 16, 17 gelangen beim Durchziehen bzw. Durchschieben der Einrichtung 3 zwischen den Rollenbahnen 1, 2 mit deren Rollen 12 in Kontakt. Die Spreizkraft der Federtöpfe 15, 15' ist dabei so bemessen, dass Ungenauigkeiten in der Strangführung ausgeglichen werden, d.h. dass sich jedes der Federstahlbänder 16, 17 jeweils an die Rollen 12 anschmiegt und dass bei vorhandenem Lagerspiel dieses ausgeschaltet wird, z.B. durch Anheben der oberen Rollen 12. Weiters wird ein Teil der Spreizkraft dazu benötigt, Federstahlbänder 16, 17 zu biegen, damit sie auch im Kreisbogen bzw. im Übergang von der Vertikalen in den Kreisbogen und vom Kreisbogen in die Horizontale stets an den Strangführungsrollen anliegen. Um diese Forderungen zu erfüllen, ist eine Abstimmung zwischen den von den Federtöpfen 15, 15' aufgebrachten Kräften und den Abmessungen (Querschnitt) der Federstahlbänder 16, 17 erforderlich. Es hat sich als vorteilhaft erwiesen, wenn die Federstahlbänder etwa 20 cm breit und 0,8 bis 1 cm dick sind, wobei die Federkraft der Federtöpfe dann je nach Grösse einer Strangführungsrolle zwischen 8 und 16 kN beträgt. Die Querschnittsabmessungen der Federstahlbänder stehen auch in einem gewissen Zusammenhang mit dem Rollenabstand. Das Verhältnis des Querschnittes eines der Federstahlbänder zum Rollenabstand benachbarter Rollen soll in einem Bereich zwischen 1 und 0,6 liegen.

Wie aus Fig. 7 ersichtlich ist, schmiegen sich die Federstahlbänder an die Rollenbahnen an und die Distanz-Messeinrichtung misst den Abstand, der sich zwischen den Federstahlbändern einstellt. Für die Ermittlung des Rollenbahnabstandes 39 sind dann noch die Stärken (Dicken) der beiden Federstahlbänder 16, 17 zu berücksichtigen.

In Fig. 8 ist ein Messschrieb dargestellt. Die punktierte Linie 68 gibt den von der Distanzmesseinrichtung 46 ermittelten Wert wieder. Die strichlierten Linien 69 geben die Messwerte an, die von dem Messkörper 55, dessen Taststift 57 mit den Mantelflächen 20 der Rollen 12 in Kontakt gelangt, ermittelt wurden. Dieser Messkörper dient somit auch dazu, die Lage der Rollen 12 auf dem Messschrieb festzuhalten. Die strichlierten Linien haben infolge einer Verzerrung der Abszissen- und Ordinatenwerte auf dem Messschrieb die Form einer Ellipse. Zweckmässig ist das den Messschrieb aufzeichnende Schreibgerät in einem am Kupplungsstück 10 montierten Kasten 70 angeordnet. Es ist jedoch auch möglich, die Messwerte mittels Schleppkabel oder auch drahtlos per Funk nach aussen durchzugeben.

Wie aus Fig. 7 ersichtlich ist, folgen die Federstahlbänder 16, 17 genau der Krümmung der Rollenbahnen. Um dies zu erreichen, müssen die Federstahlbänder 16, 17 mindestens eine dem doppelten Abstand zweier benachbarter Rollen — welcher Abstand in Fig. 7 mit 71 bezeichnet ist — entsprechende Länge aufweisen, so dass jedes Federstahlband bei Vorbeibewegen der Distanz-Messeinrichtung 46 an einer Rolle mit mindestens drei Rollen 12 einer Rollenbahn in Kontakt steht. Dadurch, dass die Distanz-Messeinrichtung 46 an der Innenseite 51 des Federstahlbandes 16 anliegt, wird unabhängig von der Lage der Rollen 12, d.h. unabhängig davon, ob die Rollen 12 der beiden Rollenbahnen 1, 2 einander genau gegenüberliegen oder nicht, stets die Distanz der Einhüllenden einer Rollenbahn 1 zur Einhüllenden der gegenüberliegenden Rollenbahn 2 gemessen.

**Patentansprüche**

1. Einrichtung zum Messen des Abstandes zweier einander gegenüberliegender Rollenbahnen einer Stranggiessanlage, mit einem durch das Profil zwischen den Rollenbahnen durchzieh- bzw. schiebbaren Messkörper, der einander gegenüberliegende, die Mantelflächen der Rollen berührende Kontaktflächen aufweist, und mit einer innerhalb des Messkörpers befestigten Distanz-Messeinrichtung, dadurch gekennzeichnet, dass die Kontaktflächen (18, 19) des Messkörpers (15, 16, 17, 46, 55) aus elastisch verformbaren Federstahlbändern (16, 17) gebildet sind, deren Längserstreckung grösser ist als der Achsabstand dreier benachbarter Rollen (12) einer der Rollenbahnen (1, 2), wobei die Federstahlbänder (16, 17) durch zwischen ihnen angeordneten Druckeinheiten (15, 15') an die Mantelflächen (20) der Rollen (12) pressbar sind und die Distanz-Messeinrichtung (46) an der Innenseite (51) eines Federstahlbandes (16) anliegt.

2. Einrichtung nach Anspruch 1, dadurch gekennzeichnet, dass die Druckeinheiten (15, 15') verteilt über die Länge der Federstahlbänder (16, 17) angeordnet sind.

3. Einrichtung nach Anspruch 2, dadurch gekennzeichnet, dass die Druckeinheiten (15, 15') etwa in einem dem Rollenabstand (71) benachbarter Rollen (12) entsprechenden Abstand ± 30% angeordnet sind.

4. Einrichtung nach den Ansprüchen 1 bis 3, dadurch gekennzeichnet, dass eine der Druckeinheiten (15') mit einem der Federstahlbänder (17) fest verbunden ist und die anderen Druckeinheiten (15) mit den Federstahlbändern (16, 17) gelenkig verbunden sind.

5. Einrichtung nach Anspruch 4, dadurch gekennzeichnet, dass die mit dem Federstahlband (17) fest verbundene Druckeinheit (15') mittels sich schräg zur Längsrichtung der Einrichtung (3) erstreckender Lenker (26) mit diesem Federstahlband (17) verbunden ist.

6. Einrichtung nach Anspruch 5, dadurch gekennzeichnet, dass jeder Lenker (26) mit dem Federstahlband (17) gelenkig und mit der Druckeinheit (15') gelenkig und senkrecht zur Fläche (18, 19) der Federstahlbänder (16, 17) verschiebbar verbunden ist.

7. Einrichtung nach den Ansprüchen 1 bis 6, dadurch gekennzeichnet, dass die Druckeinheiten als Federtöpfe (15, 15') mit veränderbarer Höhe ausgebildet sind.

8. Einrichtung nach den Ansprüchen 1 bis 7, dadurch gekennzeichnet, dass die Druckeinheiten (15, 15') mit konvexen Endflächen (21) an den Federstahlbändern (16, 17) anliegen und mit aus den konvexen Endflächen vorstehenden Zapfen (22) in Bohrungen (23) der Federstahlbänder (16, 17) ragen.

9. Einrichtung nach den Ansprüchen 1 bis 8, dadurch gekennzeichnet, dass die Distanz-Messeinrichtung (46) mit einem Ende (47) an einem der Federstahlbänder (17) angelenkt ist und mit ihrem anderen, gegenüber dem angelenkten Ende (47) beweglichen Ende (49) am gegenüberliegenden Federstahlband (16) anliegt.

10. Einrichtung nach den Ansprüchen 1 bis 9, dadurch gekennzeichnet, dass die Distanz-Messeinrichtung (46) zwischen zwei Druckeinheiten (15, 15') angeordnet ist.

11. Einrichtung nach den Ansprüchen 1 bis 10, dadurch gekennzeichnet, dass die Federstahlbänder (16, 17) innerhalb eines Rahmens (4) angeordnet sind, wobei der Rahmen mit der mit einem der Federstahlbänder (17) fest verbundenen Druckeinheit (15') über sich etwa in Längsrichtung der Einrichtung (3) erstreckende Längslenker (35) verbunden ist.

12. Einrichtung nach Anspruch 11, dadurch gekennzeichnet, dass die Längslenker (35) an der mit einem der Federstahlbänder (17) fest verbundenen Druckeinheit (15') und am Rahmen (4) angelenkt sind.

13. Einrichtung nach Anspruch 11 oder 12, dadurch gekennzeichnet, dass die Längslenker (35) an dem Rahmen (4) mittels in Langlöchern (36) geführter Bolzen (37) angelenkt sind, wobei die Längserstreckung der Langlöcher (36) in Längsrichtung der Einrichtung (3) angeordnet ist.

14. Einrichtung nach den Ansprüchen 1 bis 13, wobei Mittel zur Befestigung der Einrichtung an einem Anfahrstrangkopf vorgesehen sind, dadurch gekennzeichnet, dass die Einrichtung (3) entlang der Breite des Anfahrstrangkopfes (13) verschiebbar und in unterschiedlichen Stellungen fixierbar ist.

15. Einrichtung nach den Ansprüchen 1 bis 14, dadurch gekennzeichnet, dass neben der Distanz-Messeinrichtung (46) ein weiterer Messkörper (55) angeordnet ist, der mit einem Ende (56) an einem der Federstahlbänder (17) gelenkig befestigt ist und dessen anderes, gegenüber dem gelenkig befestigten Ende (56) bewegliches Ende (57) durch eine Bohrung (58) oder durch eine Ausnehmung des gegenüberliegenden Federstahlbandes (16) ragt und gegen die Mantelflächen (20) der Rollen (12) pressbar ist.

16. Einrichtung nach den Ansprüchen 1 bis 15, dadurch gekennzeichnet, dass die jeweils durch eine Druckeinheit (15, 15') auf die Federstahlbänder (16, 17) ausgeübte Spreizkraft zwischen 4 und 20 kN, vorzugsweise zwischen 8 und 16 kN, beträgt, wobei das Verhältnis Querschnitt (in cm²) eines Federstahlbandes (16, 17) zur Spreizkraft (in kN) einer Druckeinheit (15, 15') im Bereich von 0,8 bis 5, vorzugsweise in einem Bereich zwischen 1 und 2,5 liegt.

17. Einrichtung nach den Ansprüchen 1 bis 16, dadurch gekennzeichnet, dass das Verhältnis des Querschnittes (in cm²) eines der Federstahlbänder (16, 17) zum Rollenabstand (in cm) benachbarter Rollen in einem Bereich zwischen 1 und 0,6 liegt.

**Claims**

1. Arrangement for measuring the distance of two oppositely arranged rollerways of a continuous casting plant, comprising a measuring body capable of being pulled or pushed through the section between the rollerways and including oppositely arranged contact surfaces contacting the surface areas of the rollers, and a distance-measuring means fastened within the measuring body, characterised in that the contact surfaces (18, 19) of the measuring body (15, 16, 17, 46, 55) are formed by elastically deformable spring steel strips (16, 17) whose longitudinal extension is greater than the axial distance of three neighbouring rollers (12) of one of the rollerways (1, 2), the spring steel strips (16, 17) being pressable against the surface areas (20) of the rollers (12) by pressure units (15, 15') arranged between them and the distance-measuring device (46) contacting the inner side (51) of a spring steel strip (16).

2. Arrangement according to claim 1, characterised in that the pressure units (15, 15') are distributedly arranged over the length of the spring steel strips (16, 17).

3. Arrangement according to claim 2, characterised in that the pressure units (15, 15') are arranged approximately at a distance corresponding to the roller distance (71) of neighbouring rollers (12) ± 30%.

4. Arrangement according to claims 1 to 3, characterised in that one of the pressure units (15') is fixedly connected with one of the spring steel strips (17) and the other pressure units (15) are articulately connected with the spring steel strips (16, 17).

5. Arrangement according to claim 4, characterised in that the pressure unit (15') that is fixedly connected with the spring steel strip (17) is connected with this spring steel strip (17) by means of guide rods (26) extending obliquely to the longitudinal direction of the arrangement (3).

6. Arrangement according to claim 5, characterised in that each guide rod (26) is connected articulately and displaceably perpendicularly to the surfaces (18, 19) of the spring steel strips (16, 17) with the pressure unit (15').

7. Arrangement according to claims 1 to 6, characterised in that the pressure units are designed as spring cups (15, 15') having a variable height.

8. Arrangement according to claims 1 to 7, characterised in that the pressure units (15, 15') contact the spring steel strips (16, 17) with convex end surfaces (21) and project into bores (23) of the spring steel strips (16, 17) with pegs (22) projecting from the convex end surfaces.

9. Arrangement according to claims 1 to 8, characterised in that the distance-measuring device (46) with one end (47) is hinged to one of the spring steel strips (17) and with its other end (49), which is movable relative to the hinged end (47), contacts the opposite spring steel strip (16).

10. Arrangement according to claims 1 to 9, characterised in that the distance-measuring device (46) is arranged between two pressure units (15, 15').

11. Arrangement according to claims 1 to 10, characterised in that the spring steel strips (16, 17) are arranged within a frame (4), the frame being connected with the pressure unit (15') that is fixedly connected with one of the spring steel strips (17) via longitudinal guide rods (35) extending approximately in the longitudinal direction of the arrangement (3).

12. Arrangement according to claim 11, characterised in that the longitudinal guide rods (35) are hinged to the pressure unit (15') that is fixedly connected with one of the spring steel strips (17) and to the frame (4).

13. Arrangement according to claim 11 or 12, characterised in that the longitudinal guide rods (35) are hinged to the frame (4) by means of pins (37) guided in longitudinal holes (36), the longitudinal extension of the longitudinal holes (36) being provided in the longitudinal direction of the arrangement (3).

14. Arrangement according to claims 1 to 13 with means for fastening the arrangement to a starter bar head being provided, characterised in that the arrangement (3) is displaceable along the width of the starter bar head (13) and fixable in various positions.

15. Arrangement according to claims 1 to 14, characterised in that, beside the distance-measuring device (46) a further measuring body (55) is arranged, which, with one end (56), is articulately fastened to one of the spring steel strips (17) and whose other end (57), which is movable relative to the articulately fastened end (56), projects through a bore (58) or through a recess of the oppositely arranged spring steel strip (16) and is pressable against the surface areas (20) of the rollers (12).

16. Arrangement according to claims 1 to 15, characterised in that the straddling force each exerted onto the spring steel strips (16, 17) by one pressure unit (15, 15') amounts to between 4 and 20 kN, preferably between 8 and 16 kN, the ratio of the cross section (in cm²) of one spring steel strip (16, 17) to the straddling force (in kN) of one pressure unit (15, 15') ranging between 0.8 and 5, preferably between 1 and 2.5.

17. Arrangement according to claims 1 to 16, characterised in that the ratio of the cross section (in cm²) of one of the spring steel strips (16, 17) to the roller distance (in cm) of neighbouring rollers ranges between 1 and 0.6.

## Revendications

1. Installation pour mesurer la distance entre deux chemins de roulement se faisant face, dans une installation de coulée continue, avec un corps de mesure pouvant être tiré, respectivement déplacé par translation, à travers le profil entre les chemins de roulement, lequel corps porte des surfaces de contact se faisant face, qui touchent les surfaces latérales des rouleaux, et avec un dispositif de mesure de distance, fixé à l'intérieur du corps de mesure, caractérisée en ce que les surfaces de contact (18, 19) du corps de mesure (15, 16, 17, 46, 55) sont formées de bandes d'acier à ressort élastiquement déformables (16, 17) dont l'étendue longitudinale est plus grande que la distance entre axes de trois rouleaux voisins (12) de l'un des chemins de roulement (1, 2), les bandes d'acier à ressort (16, 17) pouvant être pressées par des ensembles de pression (15, 15'), disposés entre elles, contre les surfaces latérales (20) des rouleaux (12), et le dispositif de mesure de distance (46) s'appliquant à la face intérieure (51) d'une bande d'acier à ressort (16).

2. Installation suivant la revendication 1, caractérisée en ce que les ensembles de pression (15, 15') sont distribués sur la longueur des bandes d'acier à ressort (16, 17).

3. Installation suivant la revendication 2, caractérisée en ce que les ensembles de pression (15, 15') sont disposés à peu près à une distance correspondant à la distance entre rouleaux (71) de rouleaux voisins (12), ± 30%.

4. Installation suivant les revendications 1 à 3, caractérisée en ce que l'un des ensembles de pression (15') est relié rigidement à l'une des bandes d'acier à ressort (17) et en ce que les autres ensembles de pression (15) sont reliés à articulation aux bandes d'acier à ressort (16, 17).

5. Installation suivant la revendication 4, caractérisée en ce que l'ensemble de pression (15') relié rigidement à la bande d'acier à ressort (17) est relié à cette bande d'acier à ressort (17) au moyen de leviers de guidage (26) s'étendant obliquement par rapport à la direction longitudinale de l'installation (3).

6. Installation suivant la revendication 5, caractérisée en ce que chaque levier de guidage (26) est relié à articulation à la bande d'acier à ressort (17) et relié à articulation à l'ensemble de pression (15') et déplaçable perpendiculairement à la surface (18, 19) des bandes d'acier à ressort (16, 17).

7. Installation suivant les revendications 1 à 6, caractérisée en ce que les ensembles de pression sont réalisés en pots à ressort (15, 15') de hauteur variable.

8. Installation suivant les revendications 1 à 7, caractérisée en ce que les ensembles de pression (15, 15') s'appliquent aux bandes d'acier à ressort (16, 17) par des surfaces d'extrémité (21) convexes, et s'étendent dans des trous (23) des bandes d'acier à ressort (16, 17), par des tétons (22) dépassant des surfaces d'extrémité convexes.

9. Installation suivant les revendications 1 à 8, caractérisée en ce que l'installation de mesure de distance (46) est articulée par une extrémité (47) à l'une des bandes d'acier à ressort (17) et par son autre extrémité (49), mobile par rapport à l'extrémité articulée (47), à la bande d'acier à ressort opposée (16).

10. Installation suivant les revendications 1 à 9, caractérisée en ce que l'installation de mesure de distance (46) est disposée entre deux ensembles de pression (15, 15').

11. Installation suivant les revendications 1 à 10, caractérisée en ce que les bandes d'acier à ressort (16, 17) sont disposées à l'intérieur d'un cadre (4), le cadre étant relié à l'ensemble de pression (15') relié rigidement à l'une des bandes d'acier à ressort (17), par l'intermédiaire de leviers de guidage longitudinaux (35) s'étendant à peu près en direction longitudinale de l'installation (3).

12. Installation suivant la revendication 11, caractérisée en ce que les leviers de guidage longitudinaux (35) sont articulés à l'ensemble de pression (15') relié rigidement à l'une des bandes d'acier à ressort (17), et au cadre (4).

13. Installation suivant la revendication 11 ou 12, caractérisée en ce que les leviers de guidage longitudinaux (35) sont reliés au cadre (4) au moyen de boulons (37) guidés dans des trous allongés (36), l'étendue longitudinale des trous allongés (36) étant disposée dans la direction longitudinale de l'installation (3).

14. Installation suivant les revendications 1 à 13, où sont prévus des moyens pour la fixation de l'installation à une tête de fausse barre, caractérisée en ce que le dispositif (3) est déplaçable sur la largeur de la tête de fausse barre (13) et peut être fixé en différentes positions.

15. Installation suivant les revendications 1 à 14, caractérisée en ce que, à côté du dispositif de mesure de distance (46) est disposé un autre corps de mesure (55) qui, par une extrémité (56), est fixé à articulation à l'une des bandes d'acier à ressort (17) et dont l'autre extrémité (57), mobile par rapport à l'extrémité (56) fixée à articulation, passe à travers un trou (58) ou à travers une découpure de la bande d'acier à ressort opposée (16) et peut être pressé contre les surfaces latérales (20) des rouleaux (12).

16. Installation suivant les revendications 1 à 15, caractérisée en ce que la force d'écartement, exercée chaque fois par un ensemble de pression (15, 15') sur les bandes d'acier à ressort (16, 17) s'élève à une valeur comprise entre 4 et 20 kN, de préférence entre 8 et 16 kN, le rapport de la section transversale (en $cm^2$) d'une bande d'acier à ressort (16, 17) à la force d'écartement (en kN) d'un ensemble de pression (15, 15') se situant dans la gamme de 0,8 à 5, de préférence dans une gamme comprise entre 1 et 2,5.

17. Installation suivant les revendications 1 à 16, caractérisée en ce que le rapport de la section transversale (en $cm^2$) de l'une des bandes d'acier à ressort (16, 17), à l'écart entre rouleaux (en cm) de rouleaux voisins, se situe dans une gamme comprise entre 1 et 0,6.

FIG.1

FIG.3

FIG.4

FIG. 2

FIG. 5

FIG. 6

## FIG.7

## FIG.8